# EUROPEAN PATENT SPECIFICATION

(11) **EP 2 865 853 B1**
(45) Date of publication and mention of the grant of the patent: **30.11.2016**
(21) Application number: 14189636.5
(22) Date of filing: 21.10.2014
(51) Int. Cl.: F01K 7/20, F01K 13/02, F01K 3/04, F01K 23/10

(54) **Combined cycle plant**
Kombikraftwerk
Installation à cycle combiné

(30) Priority: 23.10.2013 JP 2013219796
(43) Date of publication of application: 29.04.2015
(73) Proprietor: Mitsubishi Hitachi Power Systems, Ltd., Yokohama 220-8401 (JP)
(72) Inventor: Nakamura, Tateki, Yokohama, Kanagawa 220-8401 (JP); Ogata, Koji, Yokohama, Kanagawa 220-8401 (JP); Kumakura, Eiji, Yokohama, Kanagawa 220-8401 (JP); Kudo, Takeshi, Yokohama, Kanagawa 220-8401 (JP)
(74) Representative: MERH-IP Matias Erny Reichl Hoffmann Patentanwälte PartG mbB

(56) References cited:
- EP-A1- 2 460 983
- US-A1- 2012 011 852
- US-A1- 2012 174 584

## Description

### {Technical Field}

The present invention relates to a combined cycle plant including a gas turbine and a steam turbine.

### {Background Art}

As a background art of the combined cycle plant including the gas turbine and steam turbine, in Japanese Patent Laid-open No. Hei 8(1996)-246814 (Patent Literature 1), in the combined cycle plant including a heat recovery boiler for heating steam generated by a refuse incinerator using exhaust heat of the gas turbine, a pipe system of connecting the middle position of the heat recovery boiler and the intermediate stage of the steam turbine is disposed, and when the gas turbine trips and the steam temperature generated by the heat recovery boiler lowers suddenly, the intermediate exit valve of the heat recovery boiler which is installed in this pipe system is opened and the steam is directly introduced into the intermediate stage of the steam turbine, thus the technology for preventing excessive heat stress is disclosed.

In Japanese Patent Laid-open No. 2000-154704 (Patent Literature 2), in the combined cycle plant including the gas turbine, steam turbine, and heat recovery boiler for generating the steam fed to the steam turbine using the exhaust heat of the gas turbine, the steam cooling technology for feeding a part of the exhaust of the high-pressure turbine of the steam turbine to the gas turbine blades and collecting the steam used to cool the gas turbine blades into the intermediate stage of the intermediate-pressure turbine of the steam turbine is disclosed.

Further, in Japanese Patent Laid-open No. Sho 58(1983)-23206 (Patent Literature 3), in the steam turbine including heat accumulators, the technology for making it possible to operate the heat accumulators in a low pressure state by forming the construction where steam is fed from a plurality of heat accumulators different in steam pressure to the mutually different pressure stages of the steam turbine, the steam valves are operated according to the steam pressures fed from the plurality of heat accumulators, and the steam feed destination is switched to the high-pressure stage or the low-pressure stage of the steam turbine is disclosed.

In Japanese Patent Laid-open No. 2006-161698 (Patent Literature 4), in the steam turbine for feeding the steam generated by the heat recovery boiler, the technology of an over-load operation device of the steam turbine capable of increasing the output of the steam turbine with suppressing main steam pressure by providing with the construction where high-temperature and high-pressure steam is introduced by branching from an entrance side of a main steam adjustment valve and interconnecting to an entrance side of a reheating portion of the steam turbine via an over-load valve is disclosed.

EP 2 460 983 A1 relates to steam-driven power plant including a steam source providing steam at a desired pressure and a steam turbine operably connected to the steam source. The steam turbine Includes a low pressure section and an intermediate pressure section. A low pressure admission conduit is configured to convey steam from the steam source to an entrance of the low pressure section and an intermediate pressure admission conduit is configured to convey steam from the steam source to a mid-steampath point of the intermediate pressure section.

### {Citation List)

### {Patent Literature)

{Patent Literature 1} Japanese Patent Laid-open No. Hei 8(1996)-246814
{Patent Literature 2} Japanese Patent Laid-open No. 2000-154704
{Patent Literature 3} Japanese Patent Laid-open No. Sho 58(1983)-23206
{Patent Literature 4} Japanese Patent Laid-open No. 2006-161698
{Patent Literature 5} EP 2 960 983 A1

### {Summary of the Invention)

### {Technical Problem}

In the combined cycle plant having the construction described in Japanese Patent Laid-open No. 2000-154704 (Patent Literature 2), the heat recovery boiler generates steam using the exhaust heat of the gas turbine, so that the steam flow rate flowing into the steam turbine depends on the exchange heat amount by the heat recovery boiler. When the efficiency of the heat recovery boiler is made fixed, the exchange heat amount is proportional to the gas turbine exhaust heat amount.

In a conventional thermal power plant such as thermal power of coal, the steam flow rate can be controlled by the amount of fuel such as coal to be input into the boiler, while in the combined cycle plant, when the efficiency of the heat recovery boiler is made fixed, to change the steam flow rate generated by the heat recovery boiler, it is necessary to change the gas turbine exhaust heat amount fed from the gas turbine to the heat recovery boiler, that is, necessary to change the gas turbine output, and it is uncontrollable practically.

Incidentally, in the combined cycle plant, when the gas turbine is deteriorated due to the deterioration with age, the gas turbine efficiency is reduced, so that for the same gas turbine output, the gas turbine exhaust heat amount discharged from the gas turbine deteriorated with age to the heat recovery boiler increases.

Due to the efficiency reduction of the gas turbine caused by the deterioration with age of the gas turbine, the gas turbine exhaust heat amount discharged from the gas turbine to the heat recovery boiler increases, and the steam flow rate generated due to the increase in the heat exchange heat amount by the heat recovery boiler increases. Due to the increase in the steam flow rate generated by the heat recovery boiler, the internal differential pressure (the pressure difference between the entrance pressure and the exit pressure (the pressure is fixed)) of the steam turbine also increases, though the exit pressure of the steam turbine is fixed, so that the entrance pressure of the steam turbine increases, that is, the internal pressure of the heat recovery boiler increases.

Inside the heat recovery boiler, a heat exchange is executed between saturated steam and gas turbine exhaust gas. In this case, in correspondence to the increase in the steam pressure, the temperature of the saturated steam rises, and the temperature difference from the gas turbine exhaust gas decreases. Namely, the efficiency of the heat recovery boiler reduces.

As a result, a problem arises that the increase rate of the steam flow rate by the heat recovery boiler reduces for the increase rate of the gas turbine exhaust heat amount caused by the deterioration with age of the gas turbine constitutes the combined cycle plant.

An object of the present invention is to provide a combined cycle plant, even when the efficiency of the gas turbine reduces due to the deterioration with age of the gas turbine and the gas turbine exhaust heat amount increases, increases the steam flow rate generated by the heat recovery boiler without reducing the efficiency of the heat recovery boiler and suppresses the plant output reduction rate.

### (Solution to Problem}

The combined cycle plant of the invention is described in claim 1.

### {Advantageous Effects of Invention)

According to the present invention, a combined cycle plant, even when the efficiency of the gas turbine reduces due to the deterioration with age of the gas turbine and the gas turbine exhaust heat amount increases, increases the steam flow rate generated by the heat recovery boiler without reducing the efficiency of the heat recovery boiler and suppresses the plant output reduction rate, can be realized.

### {Brief Description of Drawings}

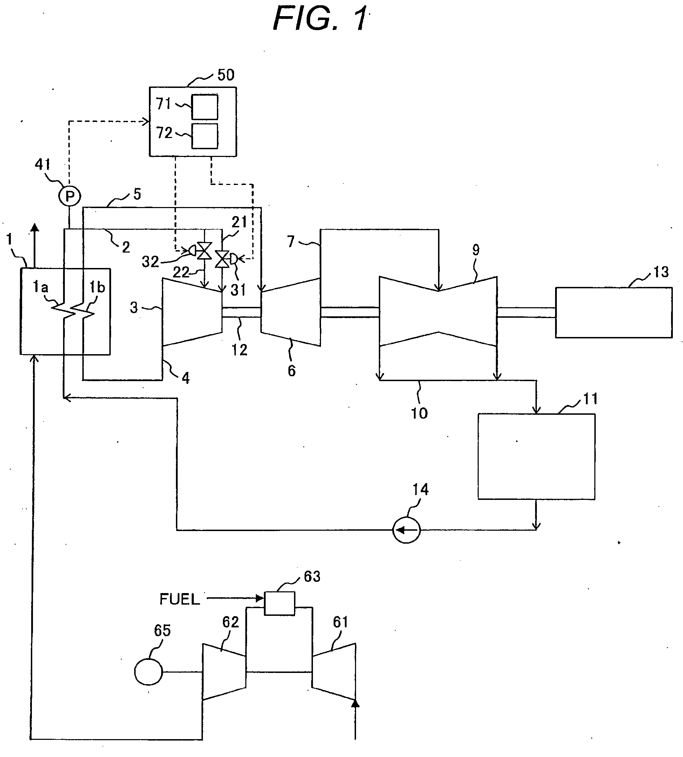

Fig. 1 is a system diagram showing the rough constitution of the combined cycle plant including the gas turbine and steam turbine, which is an embodiment of the present invention.

### {Description of Embodiments}

The combined cycle plant including the gas turbine and steam turbine, which is an embodiment of the present invention, will be explained below by referring to Fig. 1.

### {Embodiment 1}

Fig. 1 is a system diagram showing the rough constitution of the combined cycle plant including the gas turbine and steam turbine, which is an embodiment of the present invention.

The combined cycle plant of this embodiment shown in Fig. 1 comprises a gas turbine, a heat recovery boiler 1 for generating steam using exhaust heat of exhaust gas discharged from the gas turbine, and a steam turbine for feeding the steam generated by the heat recovery boiler 1 from the heat recovery boiler 1 through a steam system.

As shown in Fig. 1, the gas turbine apparatus constitutes the combined cycle plant of this embodiment is comprising a compressor 61 for compressing air to pressurized combustion air, a burner 63 for mixing and burning the combustion air pressurized by the compressor 61 and fuel and generating high-temperature combustion gas, a gas turbine 62 driven by the combustion gas generated by the burner 63, and a generator 65 rotated by driving of the gas turbine 62 for generation power.

The heat recovery boiler 1 for generating steam using exhaust gas discharged from the gas turbine 62 by driving the gas turbine 62 as a heat source is installed. A superheater 1a for exchanging heat with the exhaust gas of the gas turbine 62 and generating superheated steam, and a reheater 1b for exchanging heat with the exhaust gas of the gas turbine 62 and generating reheat steam are respectively installed inside the heat recovery boiler 1.

The steam turbine constitutes the combined cycle plant of this embodiment is comprising a high-pressure turbine 3, an intermediate-pressure turbine 6, and a low-pressure turbine 9, and furthermore, a generator 13 for generating power by being driven by the high-pressure turbine 3, intermediate-pressure turbine 6, and low-pressure turbine 9, a steam condenser 11 for cooling steam discharged from the low-pressure turbine 9 to condense it, and a steam condensing pump 14 for feeding condensed water of the steam condenser 11 to the heat recovery boiler 1 are installed.

And, in the combined cycle plant of this embodiment, the high-pressure superheated steam generated by the superheater 1a of the heat recovery boiler 1 is fed to the high-pressure turbine 3 of the steam turbine from the superheater 1a of the heat recovery boiler 1 via a steam system 2 to drive the high-pressure turbine 3.

Reheated steam which is reheated by the reheater 1b of the heat recovery boiler 1 and is lower in the pressure than the superheated steam is fed to the intermediate-pressure turbine 6 of the steam turbine from the reheater 1b of the heat recovery boiler 1 via a steam system 5 to drive the intermediate-pressure turbine 6.

The steam driving the intermediate-pressure turbine 6 is fed to the low-pressure turbine 9 of the steam turbine from the intermediate-pressure turbine 6 via a steam system 7 to drive the low-pressure turbine 9.

The steam driving the low-pressure turbine 9 is discharged from the low-pressure turbine 9, is fed to the steam condenser 11 of the steam turbine via a steam system 11, and is cooled by the steam condenser 11 to condensed water.

And, the condensed water of the steam condenser 11 is fed to the heat recovery boiler 1 by the condensate pump 14.

The steam system 2 for feeding the high-pressure superheated steam generated by the superheater 1a of the heat recovery boiler 1 to the high-pressure turbine 3 of the steam turbine branches to a first steam system 21 and a second steam system 22 in the middle of the steam system 2 and is connected to the high-pressure turbine 3.

The branched first steam system 21 is arranged so as to lead a part of the high-pressure superheated steam generated by the superheater 1a of the heat recovery boiler 1 to a first stage entrance of the high-pressure turbine 3 which constitutes the steam turbine.

Further, the branched second steam system 22 is arranged so as to lead another part of the high-pressure superheated steam generated by the superheater 1a of the heat recovery boiler 1 to a stage entrance on the downstream side of the first stage (a stage entrance on the downstream side of about one to three stages) of the high-pressure turbine 3 which constitutes the steam turbine.

In the first steam system 21, a first steam valve 31 for adjusting a steam flow rate is installed, and in the second steam system 22, a second steam valve 32 for adjusting the steam flow rate is installed.

Furthermore, on the basis of the value of the flow rate of the superheated steam generated by the superheater 1a of the heat recovery boiler 1, a control unit 50 for operating the valve opening angle of the first steam valve 31 installed in the first steam system 21 to adjust the steam flow rate of a part of the superheated steam fed to the first stage entrance of the high-pressure turbine 3, and operating the valve opening angle of the second steam valve 32 installed in the second steam system 22 to adjust the steam flow rate of another part of the superheated steam fed to the stage entrance on the downstream side of the first stage of the high-pressure turbine 3 is installed.

As mentioned above, the amount of exhaust heat of the gas turbine discharged from the gas turbine to the heat recovery boiler 1 increases due to the efficiency reduction of the gas turbine caused by the deterioration with age of the gas turbine, and the steam flow rate generated by the heat recovery boiler 1 increases due to an increase of the amount of heat of heat exchange by the heat recovery boiler 1, so that the control unit 50 is constituted, on the basis of the increase value of the flow rate of the superheated steam generated by the superheater 1a of the heat recovery boiler 1, so as to operate the valve opening angle of the first steam valve 31 and the valve opening angle of the second steam valve 32 to adjust the steam flow rates fed to the stage entrances on the first stage and on the downstream side of the first stage of the high-pressure turbine 3.

Therefore, to detect the increase of the steam flow rate generated by the heat recovery boiler 1 caused by the deterioration with age of the gas turbine, as a detection means for detecting the flow rate of the superheated steam generated by the superheater 1a installed on the heat recovery boiler 1, a pressure detector 41 for detecting the steam pressure corresponding to the flow rate of the superheated steam is installed in the steam system 2 arranged on the exit side of the superheater 1a.

The pressure detector 41 detects steam pressure corresponding to the flow rate of the superheated steam generated by the superheater 1a of the heat recovery boiler 1 and flowing down through the steam system 2 and inputs it to the control unit 50.

In the control unit 50, as a threshold value corresponding to the increase amount of the steam flow rate generated in the heat recovery boiler 1 depending on the deterioration with age of the gas turbine, a first threshold value 71 for operating so as to fully open the valve opening angle of the second steam valve 32 in the state that the valve opening angle of the first steam valve 31 is fully open and a second threshold value 72 for operating so as to hold the valve opening angle of the second steam valve 32 in a preset opening angle in the state that the valve opening angle of the first steam valve 31 is fully open are set respectively (the first threshold value 71 > the second threshold value 72).

And, on the basis of the increase situation of the detection value of the steam pressure corresponding to the flow rate of the superheated steam generated by the superheater 1a, which is detected by the pressure detector 41, the control unit 50 compares the detection value with the first pressure set value set as the first threshold value 71 and the second pressure set value set as the second threshold value 72, that are installed in the control unit 50, outputs an operation signal to the first steam valve 31 installed in the first steam system 21 to adjust the valve opening angle of the first steam valve 31, and outputs the operation signal to the second steam valve 32 installed in the second steam system 22 to adjust the valve opening angle of the second steam valve 32.

Namely, in the control unit 50, in correspondence with an increase of the steam flow rate generated in the heat recovery boiler 1 caused by the deterioration with age of the gas turbine, when the steam pressure detected by the pressure detector 41 increases more than the steam pressure corresponding to the rated steam flow rate and exceeds the first steam pressure value (for example, the steam pressure value increased about 2% from the steam pressure value at the rating time) which is the first threshold value 71, the control unit 50 outputs the operation signal to the first steam valve 31 installed in the first steam system 21 to hold the valve opening angle of the first steam valve 31 fully open, and maintains the steam flow rate of a part of the superheated steam fed to the first stage entrance of the high-pressure turbine 3 via the first steam system 21.

Simultaneously, the control unit 50 outputs the operation signal to the second steam valve 32 installed in the second steam system 22 to operate the valve opening angle of the second steam valve 32 to open, and adjusts the valve opening angle of the second steam valve 32 so as to feed the steam to the high-pressure turbine 3 from the entrance of the stage of the first stage (the stage entrance on the downstream side of about one to three stages) on the downstream side of the high-pressure turbine 3 via the second steam system 22.

As a result, in the combined cycle plant of this embodiment, even when the efficiency of the gas turbine reduces due to the deterioration with age of the gas turbine and the amount of heat of the gas turbine increases, the steam flow rate fed from the entrance of the stage on the downstream side of the first stage of the high-pressure turbine 3 via the second steam system 22 is adjusted, thus a combined cycle plant for increasing the steam flow rate generated by the heat recovery boiler without reducing the efficiency of the heat recovery boiler and suppressing a reduction rate of the plant output can be realized.

As mentioned above, the control to maintain the flow rate of the steam fed to the first stage entrance of the high-pressure turbine 3 by the operation of the valve opening angle of the first steam valve 31 by the control unit 50 and to adjust the flow rate of the steam fed to the stage entrance on the downstream side of the first stage of the high-pressure turbine 3 by the operation of the valve opening angle of the second steam valve 32 is applied, thus when a detection signal of the steam pressure detected by the pressure detector 41 reduces from the steam pressure value of the first pressure set value (for example, the steam pressure value increased about 2% from the steam pressure value at the rating time) which is set as the first threshold value 71 and reaches a steam pressure value (the first threshold value 71 > the second threshold value 72) higher than the steam pressure value (for example, the steam pressure value increased about 1% from the steam pressure value at the rating time) of the second pressure set value which is the second threshold value 72, the control unit 50 outputs the operation signal to the first steam valve 31 installed in the first steam system 21 to hold the valve opening angle of the first steam valve 31 fully open, and maintains the flow rate of the steam fed to the first stage entrance of the high-pressure turbine 3 via the first steam system 21.

Simultaneously, the control unit 50 outputs the operation signal to the second steam valve 32 installed in the second steam system 22 to operate the valve opening angle of the second steam valve 32 to open to hold it at a preset opening angle, and adjusts the valve opening angle of the second steam valve 32 so as to permit the flow rate of the steam fed to the entrance of the stage on the downstream side of the first stage (the stage entrance on the downstream side of about one to three stages) of the high-pressure turbine 3 via the second steam system 22.

As a result, in the combined cycle plant of this embodiment, even when the efficiency of the gas turbine reduces due to the deterioration with age of the gas turbine and the amount of exhaust heat of the gas turbine increases, the steam flow rate fed from the entrance of the stage on the downstream side of the first stage of the high-pressure turbine 3 via the second steam system 22 is adjusted so as to be maintained at a scheduled flow rate, thus a combined cycle plant for increasing the steam flow rate generated by the heat recovery boiler without reducing the efficiency of the heat recovery boiler and suppressing a reduction rate of the plant output can be realized.

Generally, the steam turbine comprises the three sections of the high-pressure turbine 3, the intermediate-pressure turbine 6, and the low-pressure turbine 9, though in the combined cycle plant of this embodiment, a model type and construction of the steam turbine is no particular object.

In the combined cycle plant, generally, the exhaust heat increase amount due to the deterioration with age of the gas turbine is of the order of several percent, while the steam turbine is often designed at about 20 to 30 stages in total of the high-pressure turbine 3, the intermediate-pressure turbine 5, and the low-pressure turbine 9.

Therefore, in the combined cycle plant of this embodiment, the distance between the first steam system 21 and the second steam system 22 for introducing the steam generated by the heat recovery boiler 1 to the high-pressure turbine 3, the first steam system 21 and the second steam system 22 being connected to the high-pressure turbine 3, is about 1 to 3 stages inside the high-pressure turbine 3, thus together with the first steam system 21, the second steam system 22 is also arranged in the high-pressure turbine 3.

In the steam turbine, generally, as the entrance pressure increases, the theoretical heat efficiency on the Rankine cycle becomes better; however, if the entrance pressure of the steam turbine becomes excessively high, the steam flow rate itself reduces due to the efficiency reduction of the heat recovery boiler 1, consequently the steam turbine output is reduced. (Because of the steam turbine output = the steam flow rate x steam turbine efficiency)

The steam turbine and heat recovery boiler constituting the combined cycle plant is designed suitably in consideration of the balance with cost etc., so that the combined cycle plant of this embodiment is constituted so as to prevent loss of the balance.

In the combined cycle plant of this embodiment, the steam generated by the heat recovery boiler 1 is generally fed to the first stage entrance of the high-pressure turbine 3 via the first steam system 21 to operate; however, when the steam flow rate increases due to the increase of the amount of exhaust heat of the gas turbine, and the internal steam pressure of the heat recovery boiler increases due to the increase of the pressure at the entrance of the steam turbine, a part of the steam generated by the heat recovery boiler 1 is fed to the first stage of the high pressure turbine 3 via the first steam system 21 and additionally another part of the steam generated by the heat recovery boiler 1 is fed to the stage entrance on the downstream side of the first stage of the high-pressure turbine 3 via the second steam system 22, thus the internal stage of the steam turbine with the steam passing through is adjusted, thereby the entrance pressure of the steam turbine and the internal pressure of the heat recovery boiler can be adjusted.

As a result, in the combined cycle plant of this embodiment, even when the efficiency of the gas turbine reduces due to the deterioration with age of the gas turbine and the amount of exhaust heat of the gas turbine increases, the steam flow rate fed from the entrance of the stage on the downstream side of the first stage of the high-pressure turbine 3 via the second steam system 22 is adjusted so as to be maintained at a scheduled flow rate, thus a combined cycle plant for increasing the steam flow rate generated by the heat recovery boiler without reducing the efficiency of the heat recovery boiler to thereby suppress a reduction rate of the plant output can be realized.

As explained above, according to this embodiment, even when the efficiency of the gas turbine reduces due to the deterioration with age of the gas turbine and the amount of exhaust heat of the gas turbine increases, a combined cycle plant for increasing the steam flow rate generated by the heat recovery boiler without reducing the efficiency of the heat recovery boiler to thereby suppress the reduction rate of the plant output can be realized.

## Claims

1. A combined cycle plant including a gas turbine (62), a heat recovery boiler (1) for generating steam using exhaust heat of the gas turbine (62), and a high pressure steam turbine (3) fed with the superheated steam generated by the heat recovery boiler (1) from the heat recovery boiler (1) through a steam system (2),
**characterized in that**,
the steam system (2) is disposed so as to branch to a first steam system (21) for introducing the superheated steam to a first stage entrance of the high pressure steam turbine (3) and a second steam system (22) for introducing the superheated steam to a stage entrance on a downstream side of the first stage of the high pressure steam turbine (3) and on a downstream side of the first steam system (21), and
when a steam pressure of the steam generated by the heat recovery boiler (1) increases because of the deterioration with age of the gas turbine more than the steam pressure corresponding to the rated steam flow rate and exceeds a predetermined threshold value, a flow rate of the steam fed to the high pressure steam turbine (3) via the first steam system (21) and the second steam system (22) is adjusted so as to be maintained at a steam flow rate generated by the heat recovery boiler (1).

2. The combined cycle plant according to Claim 1, wherein:
the steam turbine is comprising a high-pressure turbine (3) with high-pressure steam fed and an intermediate-low pressure turbine (6) with low-pressure steam fed;
the first steam system (21) is disposed to feed a part of the steam generated by the heat recovery boiler (1) to the first stage entrance of the high-pressure turbine (3) of the steam turbine;
the second steam system (22) is disposed to feed another part of the steam generated by the heat recovery boiler (1) to the stage entrance on the downstream side of the first stage of the high-pressure turbine (3) of the steam turbine;
a first steam valve (31) for adjusting a feed amount of the steam fed to the first stage entrance of the high-pressure turbine (3) is installed in the first steam system (21);
a second steam valve (32) for adjusting a feed amount of the steam fed to the stage entrance on the downstream side of the first stage of the high-pressure turbine (3) is installed in the second steam system (22); and
a control unit (50) is installed to operate the first steam valve (31) and the second steam valve (32) on the basis of the steam flow rate generated by the heat recovery boiler (1) so that the steam flow rate fed to the first stage entrance of the high-pressure turbine (3) of the steam turbine and the stage entrance on the downstream side of the first stage is adjusted.

3. The combined cycle plant according to Claim 2, wherein:
a pressure detector (41) for measuring pressure of the steam generated by the heat recovery boiler (1), which is a detection means for detecting the steam flow rate generated by the heat recovery boiler (1), is installed in the steam system for feeding from the heat recovery boiler (1) to the steam turbine, and
the control unit (50) operates opening angles of the first steam valve (31) and the second steam valve (32) and adjusts the flow rate of the steam fed to the steam turbine via the first steam system (21) and the second steam system (22) on the basis of a measured pressure value of the steam generated by the heat recovery boiler (1), which is measured by the pressure detector.

## Patentansprüche

1. Ein Kombikraftwerk mit einer Gasturbine (62), einem Abhitzkessel (1) zur Dampferzeugung unter Verwendung der Abwärme der Gasturbine (62) und einer Hochdruckdampfturbine (3) der der durch den Abhitzkessel (1) erzeugte überhitzte Dampf aus dem Abhitzkessel (1) durch ein Dampfsystem (2) zugeführt wird,
**dadurch gekennzeichnet, dass**
das Dampfsystem (2) so beschaffen ist, dass es sich in ein erstes Dampfsystem (21) zur Einspeisung des überhitzten Dampfes in einen ersten Stufengang der Hochdruckdampfturbine (3) und ein zweites Dampfsystem (22) zur Einspeisung des überhitzen Dampfs in einen Stufeneingang auf der stromabwärts liegenden Seite der ersten Stufe der Hochdruckdampfturbine (3) und einer stromabwärts liegenden Seite des ersten Dampfsystems (21), aufteilt und
wenn der Dampfdruck des, durch den Abhitzkessel erzeugten Dampfes, aufgrund des Verschleißes der Gasturbine, um mehr ansteigt, als der Dampfdruck entsprechend der bemessenen Dampfdurchflussmenge und einen vorbestimmten Schwellenwert überschreitet, wird ein Dampfdurchfluss der, der Hochdruckdampfturbine (3) über das erste Dampfsystem (21) und das zweite Dampfsystem (22) zugeführt wird, so angepasst, dass ein im Abhitzkessel erzeugter Dampfdurchfluss aufrecht erhalten wird.

2. Das Kombikraftwerk gemäß Anspruch 1, worin die Dampfturbine eine, mit Dampfhochdruck gespeiste, Hochdruckturbine (3) und eine dazwischenliegende, mit Tiefdruckdampf gespeiste, Tiefdruckturbine (6) umfasst;
das erste Dampfsystem (21) ist so beschaffen, dass ein erster Teil des, durch den Abhitzkessel (1) erzeugten, Dampfes dem ersten Stufeneingang der Hochdruckturbine (3) der Dampfturbine zugeführt wird;
das zweite Dampfsystem (22) ist so beschaffen, dass ein anderer Teil des, durch den Abhitzkessel (1) erzeugten, Dampfes, dem Stufeneingang der ersten Stufe der Hochdruckturbine (3) der Dampfturbine zugeführt wird;
ein erstes Dampfventil (31) zur Anpassung der Dampfmenge, die dem ersten Stufeneingang der Hochdruckturbine (3) zugeführt wird, ist in das erste Dampfsystem eingebaut;
ein zweites Dampfventil (32) zur Anpassung der Dampfmenge, die dem Stufeneingang auf der stromabwärts liegenden Seite der ersten Stufe der Hochdruckturbine (3) zugeführt wird, ist in das zweite Dampfsystem (22) eingebaut; und
ein Steuergerät (50) das zur Bedienung des ersten Dampfventils (31) und des zweiten Dampfventils (32) auf der Grundlage des Dampfdurchflusses, der im Abhitzkessel (1) erzeugt wird, eingebaut ist, damit der Dampfdurchfluss, der dem ersten Stufeneingang der Hochdruckturbine (3) der Dampfturbine und dem Stufeneingang auf der stromabwärts liegenden Seite der ersten Stufe angepasst wird.

3. Das Kombikraftwerk gemäß Anspruch 2, worin ein Druckdetektor (41) zum Messen des Drucks des, durch den Abhitzkessel (1) erzeugten, Dampfes, der ein Erkennungsmittel für den, durch den Abhitzkessel (1) erzeugten, Dampfdurchflusses ist, in das Dampfsystem, zum Einspeisen aus dem Abhitzkessel (1) in die Dampfturbine, eingebaut ist, und
die Steuereinheit (50), die die Öffnungswinkel des ersten Dampfventils (31) und des zweiten Dampfventils (32) bedient und den Durchfluss des Dampfes, der über das erste Dampfsystem (21) und das zweite Dampfsystem (22) auf der Grundlage des, von dem Druckdetektor gemessenen, Druckgehaltes des Dampfes, der durch den Abhitzkessel (1) erzeugt wird, anpasst.

## Revendications

1. Installation à cycle combiné incluant une turbine à gaz (62), une chaudière à récupération de chaleur (1) pour générer de la vapeur en utilisant les gaz d'échappement de la turbine à gaz (62) et une turbine à vapeur à haute pression (3) à laquelle la vapeur surchauffée générée par la chaudière à récupération de chaleur (1) est menée depuis la chaudière à récupération de chaleur (1) via un système à vapeur (2), **caractérisée en ce que**
le système à vapeur (2) est disposé de manière à être ramifié en un premier système à vapeur (21) pour introduire la vapeur surchauffée à une entrée de premier étage de la turbine à vapeur à haute pression (3) et un second système à vapeur (22) pour introduire la vapeur surchauffée à une entrée d'étage sur un côté aval du premier étage de la turbine à vapeur à haute pression (3) et sur un côté aval du premier système à vapeur (21), et
quand, à cause de la détérioration de la turbine à gaz avec l'âge, une pression de la vapeur générée par la chaudière à récupération de chaleur (1) est augmentée plus que la pression de vapeur correspondant au débit de vapeur nominal et excède une valeur seuil prédéterminée, un débit de la vapeur alimentée à la turbine à vapeur à haute pression (3) via le premier système à vapeur (21) et le second système à vapeur (22) est ajusté de manière à être maintenu à un débit de vapeur généré par la chaudière à récupération de chaleur (1).

2. Installation à cycle combiné selon la revendication 1, dans laquelle :
la turbine à vapeur comprend une turbine à haute pression (3) avec alimentation de vapeur à haute pression et une turbine intermédiaire à faible pression (6) avec alimentation de vapeur à faible pression ;
le premier système à vapeur (21) est disposé pour alimenter une partie de la vapeur générée par la chaudière à récupération de chaleur (1) vers l'entrée de premier étage de la turbine à haute pression (3) de la turbine à vapeur ;
le second système à vapeur (22) est disposé pour alimenter une autre partie de la vapeur générée par la chaudière à récupération de chaleur (1) vers l'entrée d'étage du côté aval du premier étage de la turbine à haute pression (3) de la turbine à vapeur ;
une première valve à vapeur (31) pour ajuster une quantité de vapeur alimentée à l'entrée de premier étage de la turbine à haute pression (3) est installée dans le premier système à vapeur (21) ;
une seconde valve à vapeur (32) pour ajuster quantité de vapeur alimentée à l'entrée d'étage sur le côté aval du premier étage de la turbine à haute pression (3) est installée dans le second système à vapeur (22) ; et
une unité de commande (50) est installée pour actionner la première valve à vapeur (31) et la seconde valve à vapeur (32) sur la base du débit de vapeur généré par la chaudière à récupération de chaleur (1), de sorte que le débit de vapeur alimenté à l'entrée de premier étage de la turbine à haute pression (3) de la turbine à vapeur et à l'entrée d'étage sur le côté aval du premier étage est ajusté.

3. Installation à cycle combiné selon la revendication 2, dans laquelle :
un détecteur de pression (41) pour mesurer la pression de la vapeur générée par la chaudière à récupération de vapeur (1), qui est un moyen de détection pour détecter le débit de vapeur généré par la chaudière à récupération de chaleur (1), est installé dans le système à vapeur pour alimentation depuis la chaudière à récupération de vapeur (1) vers la turbine à vapeur, et
l'unité de commande (60) commande les angles d'ouverture de la première valve à vapeur (31) et de la seconde valve à vapeur (32) et ajuste le débit de la vapeur alimentée à la turbine à vapeur via le premier système à vapeur (21) et le second système à vapeur (22) sur la base d'une valeur de pression mesurée de la vapeur générée par la chaudière à récupération de chaleur (1), qui est mesurée par le détecteur de pression.
